# EUROPEAN PATENT APPLICATION

(11) **EP 4 707 491 A2**
(43) Date of publication of application: **11.03.2026**
(21) Application number: 26150956.6
(22) Date of filing: 19.11.2021
(51) Int. Cl.: E04B 9/18

(54) **RESILIENT FASTENING ARRANGEMENT, VIBRATION DAMPING ASSEMBLY AND METHOD FOR CONSTRUCTING A VIBRATION DAMPING ASSEMBLY**

(30) Priority: 20.11.2020 SE 2051355
(62) Divisional of application: 21815708.9
(71) Applicant: Akoustos AB, 236 38 Höllviken (SE)
(72) Inventor: ISSAL, Raimo, 212 32 Malmö (SE); WERNERSSON, Håkan, 236 38 Höllviken (SE)
(74) Representative: Ström & Gulliksson AB

(57) **Abstract**

Disclosed is a resilient fastening arrangement (200) for construction of a vibration damping assembly (100) comprising at least a first structure (110) and a second structure (120). The resilient fastening arrangement (200) comprises a first part (210) for fixation to the first structure (110) of the assembly (100) and a second part (220) for engagement with the second structure (120) of the assembly (100). The arrangement (200) further comprise a third part (230) arranged to resiliently connect the first part (210) to the second part (220) along an arrangement axis (D). The third part (230) comprises a resilient member arranged to at least partially extend within a hole (125) of the first structure (110) and/or of the second structure (120) of the assembly (100). Further resilient fastening arrangement (200), vibration damping assemblies (100) and a method for constructing a vibration damping assembly (100) are disclosed.

## Description

### TECHNICAL FIELD

The present invention relates to a resilient fastening arrangement for construction of a vibration damping assembly. In particular, the resilient fastening arrangement is suitable for constructing arrangements for reducing vibrations, sound or noise propagating from one room of a building or accommodation to an adjacent room.

### BACKGROUND

Undesired sound or noise, propagating from one room in a building to another, may have a negative impact on people's health. Common measures for sound proofing include increasing the thickness of the separating wall or floor/ceiling, adding an additional amount of sound damping material and increasing the number of composing layers of the separating wall or floor/ceiling. Additional measures include the employment of highly specialized damping materials built in or applied to the separating wall or floor/ceiling. However, these solutions are associated with high costs.

One mechanism, by which sound or noise propagates through a wall or floor/ceiling, involves mechanical communication between rigid parts therein. Such mechanical communication is largely due to the use of traditional stationary fastening elements, such as e.g. monolithic metallic screws or nails.

Resilient fastening elements, such as e.g. the resilient fastening arrangement of WO 2008/115119 A1, is generally preferred over traditional stationary fastening elements for assembly of separate parts of a wall or ceiling/floor, in order to achieve reduced transmission of sound or noise there through.

In WO 2014/080022, a damping assembly for reducing vibrations, sound or noise is presented. The assembly comprises a first structure, a second structure and a resilient attachment member attaching the first structure to the second structure.

A resilient fastening arrangement generally comprises a spring means for resiliently retaining the different constructions at a distance from each other, thereby as far as possible preventing mechanical contact between the constructions. Improper assembly of such resilient fastening elements with the separate parts and/or in combination with other features of these separate parts may, however, result in no, or even increased, transmission of sound or noise, which is highly undesired. For example, improper assembly may yield an internally resonating wall or floor/ceiling, which is less damping than the corresponding wall or floor/ceiling in which traditional stationary fastening elements have been used. Further to this, the construction of the resilient fastening arrangement must be easy to manufacture, reliable, cost effective and sturdy in order to enable easy constructions of vibration damping assembly that have good vibration damping properties over time and are fast to assemble at a reasonable cost.

Hence, an improved vibration damping assembly usable to create vibrating damping assembly, e.g. damping wall or floor/ceiling, for reduction of vibrations, sound or noise would be advantageous.

### SUMMARY

It is an object of the present invention, considering the disadvantages mentioned above, to provide an improved damping assembly which effectively reduces vibrations, sound or noise between two structures. This object is achieved by the technique set forth in the appended independent claims with preferred embodiments defined in the dependent claims related thereto.

In a first aspect, a resilient fastening arrangement for construction of a vibration damping assembly comprising at least a first structure and a second structure is introduced. The resilient fastening arrangement comprises a first part for fixation to the first structure of the assembly, a second part for engagement with the second structure of the assembly, and a third part arranged to resiliently connect the first part to the second part along an arrangement axis. The third part comprises a resilient member arranged to at least partially extend within a hole of the first structure and/or of the second structure of the assembly.

In one embodiment of the resilient fastening arrangement, the resilient member comprises a core region located, along the arrangement axis, between two end regions of the resilient member. Each of the end regions is attached to the first and second parts respectively. The core region is configured to have a core region spring rate along the arrangement axis. The end regions are configured to have a spring rate along the arrangement axis being different from the first axial spring rate. This is beneficial since it enables the resilient member to be easily and securely fastened to the first and second parts.

In one embodiment, the first part and second part of the resilient fastening arrangement are solely connected by means of the third part. In one embodiment, said first and second part are solely connected by means of the resilient member of the third part.

In one embodiment, an axial portion of the resilient fastening arrangement extending along the arrangement axis only constituted by the resilient member is arranged to at least partially extend within the hole of the first and/or second structure. This is associated with an improved damping performance due to it preventing dirt from getting into the resilient member and causing the part of the resilient member which extends within the hole to be out of contact with other components such as the interior wall of the hole. It also allows for a resilient fastening arrangement suitable for fastening to thinner structures.

In a second aspect, a resilient fastening arrangement for construction of a vibration damping assembly comprising at least a first structure and a second structure is introduced. The resilient fastening arrangement comprises a first part for fixation to the first structure of the assembly, a second part for engagement with the second structure of the assembly, and a third part comprising a resilient member arranged to resiliently connect the first part to the second part along an arrangement axis. Wherein the resilient member comprises a core region located, along the arrangement axis, between two end regions of the resilient member. Each of the end regions is attached to the first and second parts respectively. The core region is configured to have a core region spring rate along the arrangement axis, and the end regions are configured to have a spring rate along the arrangement axis being different from the core region spring rate.

In one embodiment of the resilient fastening arrangement, the resilient member is arranged to at least partially extend within a hole of the first structure and/or of the second structure of the assembly. This is beneficial since a thickness, along the arrangement axis, of the vibration damping assembly may be reduced.

In one embodiment, the first part and second part of the resilient fastening arrangement are solely connected by means of the third part. In one embodiment, said first and second part are solely connected by means of the resilient member of the third part.

In one embodiment, an axial portion of the resilient fastening arrangement extending along the arrangement axis only constituted by the resilient member is arranged to at least partially extend within the hole of the first and/or second structure. This is associated with an improved damping performance due to it preventing dirt from getting into the resilient member and causing the part of the resilient member which extends within the hole to be out of contact with other components such as the interior wall of the hole. It also allows for a resilient fastening arrangement suitable for fastening to thinner structures.

In one embodiment of either of the resilient fastening arrangements, the core region spring rate of the core region of the resilient member is lower than the spring rate of the end regions of the resilient member. This is beneficial since a thickness of the vibration damping assembly may be reduced.

In one embodiment of either of the resilient fastening arrangements, the hole is a through-hole of the second structure and the resilient fastening arrangement is adapted such that the resilient member is to be fully arranged in the through-hole of the second structure of the assembly. This is beneficial since a thickness of the vibration damping assembly may be reduced.

In one embodiment of either of the resilient fastening arrangements, the second part comprises a head portion provided with head portion connection means adapted to engage the second structure by fixation to the second structure. This is beneficial since it e.g. enables a secure connection between the second structure and the resilient fastening arrangement.

In one embodiment of either of the resilient fastening arrangements, the resilient member is arranged such that, when the resilient fastening arrangement is used in the construction of the vibration damping assembly, fixation of the resilient fastening arrangement to the first structure and second structure, causes biasing of the resilient member. This is beneficial because the biasing may be removed when the fastening is done leaving the resilient member unbiased and free to dampen vibration in both directions along the arrangement axis.

In one embodiment of either of the resilient fastening arrangements, the first part comprises piercing means adapted to form the through-hole for the resilient member in the second structure and/or the hole for the resilient member in the first structure of the assembly, when the resilient fastening arrangement is fastened to vibration damping assembly. This is beneficial since it is a very time efficient way of creating the hole, no extra steps such as pre-drilling are required.

In one embodiment of either of the resilient fastening arrangements, the first part comprises a first connecting portion, the second part comprises a second connecting portion and wherein a first end of the third part is adapted to be attached to first connecting portion and a second end of the third part is adapted to be attached to the second connecting portion. This is beneficial since it allows for easy and cost-effective assembly of the resilient fastening arrangement.

In one embodiment of either of the resilient fastening arrangements, the resilient member is a spring. Springs are resilient, have long life-time and are possible to control when it comes to spring parameters, e.g. number of loops, spring rate, size (all dimensions) etc.

In one embodiment of either of the resilient fastening arrangements, the third part is attached to the first and second connecting portions by means of threading on the first and second connecting portions respectively. This is beneficial since it allows for easy and cost-effective assembly of the resilient fastening arrangement.

In one embodiment of either of the resilient fastening arrangements, a threading pitch of the threading of the first and second connecting portions is offset, along the arrangement axis, from a spring pitch of the spring such that the spring is biasedly attached to the first and second connecting portions. This is beneficial since it allows for easy and cost-effective assembly of the resilient fastening arrangement. Further to this, it allows for secure fastening of the spring and the threads may be adapted such that it is tightened when the resilient fastening member is used in the construction of a vibration damping assembly.

In one embodiment of either of the resilient fastening arrangements, the spring pitch of the spring is higher in a core region of the spring arranged between the first and second parts than in end regions attaching to the first and second parts. This is beneficial since it enables the resilient member to be easily and securely fastened to the first and second parts.

In one embodiment of either of the resilient fastening arrangements, the third part comprises a sleeve arranged to at least partly, along the arrangement axis, surround the resilient member. This is beneficial since the sleeve can protect the resilient member during use of the resilient fastening arrangement in a vibration damping assembly.

In one embodiment of either of the resilient fastening arrangements, the first part is provided with threads for fixation in the first structure. This is beneficial since threads provide secure fastening in many materials.

In one embodiment of either of the resilient fastening arrangements, a head portion of the second part is provided with head part connection means in the form of threads for fixation in the second structure. This is beneficial since it e.g. enables a secure connection between the second structure and the resilient fastening arrangement.

In one embodiment of either of the resilient fastening arrangements, the first part further comprises a radially protruding flange portion. The flange portion is beneficial at least since it can protect the third part from being damaged during use of the resilient fastening arrangement in the construction of the vibration damping assembly.

In one embodiment of either of the resilient fastening arrangements, a maximum radius of the first part is equal to, or larger than, a maximum radius of the third part and a maximum radius of the second part is larger than the maximum radius of the first part. This is beneficial at least since it allows for a secure fastening in the vibration damping assembly.

In a third aspect, a vibration damping assembly comprising at least a first structure and a second structure, the first structure such as a supporting section in the form of a studded section and the second structure such as a sheet material in the form of drywall or metal is presented. The second structure is resiliently attached to the first structure by means of a plurality of resilient fastening arrangements comprising a first part for fixation to the first structure of the assembly, a second part for engagement with the second structure of the assembly, and a third part comprising a resilient member. Wherein the resilient member is arranged to resiliently connect the first part to the second part along an arrangement axis. The resilient member comprises a core region located, along the arrangement axis, between two end regions of the resilient member. Each of the end regions is attached to the first and second parts respectively. The core region is configured to have a core region spring rate along the arrangement axis, and the end regions are configured to have a spring rate along the arrangement axis being different from the first axial spring rate.

In one embodiment of the vibration damping assembly, the second structure is located between a head portion of the second part of the resilient fastening arrangement and the first structure. This is beneficial when e.g. the second structure is not of a material that it is suitable to fasten the second part in.

In one embodiment of the vibration damping assembly, the resilient member is accommodated by a through-hole of the second structure and/or a hole of the first structure. This is beneficial since a thickness, along the arrangement axis, of the vibration damping assembly may be reduced.

In one embodiment of the vibration damping assembly, the second structure is biased in relation to first structure by means of the resilient member of the resilient fastening arrangement. This is beneficial since it enables the resilient member to better dampen vibration.

In a fourth aspect, a vibration damping assembly comprising at least a first structure and a second structure, the first structure such as a supporting section in the form of a studded section and the second structure such as a sheet material in the form of drywall or metal is introduced. The second structure is resiliently attached to the first structure by means of a plurality of resilient fastening arrangements comprising a first part fixed to the first structure of the assembly, a second part fixed to the second structure of the assembly, and a third part arranged to resiliently connect the first part to the second part along an arrangement axis. The third part comprises a resilient member arranged to at least partially extend within a hole of the first structure and/or of the second structure of the assembly.

In one embodiment, the first part and second part of the resilient fastening arrangement are solely connected by means of the third part. In one embodiment, said first and second part are solely connected by means of the resilient member of the third part.

In one embodiment, an axial portion of the resilient fastening arrangement extending along the arrangement axis only constituted by the resilient member is arranged to at least partially extend within the hole of the first and/or second structure. This is associated with an improved damping performance due to it preventing dirt from getting into the resilient member and causing the part of the resilient member which extends within the hole to be out of contact with other components such as the interior wall of the hole. It also allows for a resilient fastening arrangement suitable for fastening to thinner structures.

In one embodiment of the vibration damping assembly the hole is a through-hole of the second structure and the resilient member is accommodated by the through-hole of the second structure. This is beneficial since a thickness, along the arrangement axis, of the vibration damping assembly may be reduced.

In one embodiment of the vibration damping assembly, the second structure is biased in relation to first structure by means of the resilient member of the resilient fastening arrangement. This is beneficial since it enables the resilient member to better dampen vibration.

In a fifth aspect a method for constructing a vibration damping assembly is introduced. The method comprising providing a first structure such as a supporting section in the form of a studded section, further providing a second structure such as a sheet material in the form of drywall or metal, and arranging a resilient fastening arrangement according to previous aspect or embodiments such that the first part of the resilient fastening arrangement is fixed to the first structure of the arrangement. Further to this, the second part of the resilient fastening arrangement is engaging the second structure of the assembly. The method further comprises, during the arranging, subjecting the resilient fastening arrangement to an axial force such that the resilient member is biased during the arranging and removing the axial force such that the second structure becomes resiliently fastened to the first structure by means of the resilient fastening arrangement. The biasing of the resilient member ensures sufficient damping properties for the vibration damping assembly while further mitigating the risk for improper installation of the assembly with undesirably large gaps between the first and second structure etc.. Due to the resiliency of the resilient member, the intended gap between the first and second structure may occur naturally when the axial force is removed.

In one embodiment of the method, the step of arranging the resilient fastening arrangement further comprises arranging the third part of the resilient fastening arrangement such that it is at least partly arranged in a hole of the first structure and/or in a through-hole of the second structure of the assembly. This is beneficial since a thickness, along the arrangement axis, of the vibration damping assembly may be reduced.

In one embodiment of the method. it further comprises forming the through-hole in the second structure before the step of arranging the resilient fastening arrangement. This is beneficial since it allows the hole to be pre-drilled at any time during construction of the assembly and/or the second structure.

In one embodiment of the method, the through-hole is formed by means of a piercing means of the first part during the arranging of the resilient fastening arrangement to the second structure and the first structure. This is beneficial since it is a very time efficient way of creating the hole, no extra steps such as pre-drilling are required.

In one embodiment of the method, the step of arranging the resilient fastening arrangement is performed by means of rotating the resilient fastening arrangement about the arrangement axis. This is beneficial since screwing of the resilient fastening arrangement yields secure fastening.

In one embodiment of the method, the rotation is performed until and end section of the second part of the resilient fastening arrangement is substantially flush with a face of the second structure facing away from the first structure. This is beneficial since it provides a flat surface that is fast and efficient to plaster.

In one embodiment of the method, the step of subjecting comprises fixating a third structure, such as a sheet material in the form of drywall or metal, such that the second structure is sandwiched between the first structure and the third structure. This is beneficial since it provides additional securement of the resilient fastening arrangement and it yields a flat surface that is efficient to paint, plaster etc.

### BRIEF DESCRIPTION OF THE DRAWINGS

Embodiments of the invention will be described in the following; references being made to the appended diagrammatical drawings which illustrate non-limiting examples of how the inventive concept can be concretized practice.
Fig 1. is a schematic side view of a vibration damping assembly according to embodiments of the invention.
Fig. 2 is a schematic side view of a vibration damping assembly according to embodiments of the invention.
Figs. 3a-b are side views of a resilient fastening arrangement according to embodiments of the invention.
Fig. 4 is a schematic front view of a resilient fastening arrangement according to embodiments of the invention.
Figs. 5a-c are schematic back views of a resilient fastening arrangement according to embodiments of the invention.
Figs. 6a-b are cross sectional views of a resilient fastening arrangement and a tool according to embodiments of the invention.
Figs. 7a-b are schematic side views of a vibration damping assembly according to embodiments of the invention.
Figs. 8a-d are schematic side views of a vibration damping assembly according to embodiments of the invention.
Figs. 9a-b are schematic side views of a vibration damping assembly according to embodiments of the invention.
Fig. 10 is a side view of a resilient fastening arrangement according to embodiments of the invention.
Fig. 11 is a schematic view of a method for construction of a vibration damping assembly according to embodiments of the invention.
Figs. 12a-e are side views of a resilient fastening arrangement according to embodiments of the invention.
Figs. 13a-d are side views of a resilient fastening arrangement according to embodiments of the invention.
Figs. 14a-d are side views of a resilient fastening arrangement according to embodiments of the invention.
Figs. 15a-e are side views of a resilient fastening arrangement according to embodiments of the invention.
Figs. 16a-c are side views of a resilient fastening arrangement according to embodiments of the invention.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The terms "a" and "an" are defined as one or more unless this disclosure explicitly requires otherwise. The terms "substantially," "approximately," and "about" are defined as largely, but not necessarily wholly what is specified, as understood by a person of ordinary skill in the art. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are openended linking verbs. As a result, a method that "comprises," "has," "includes" or "contains" one or more steps possesses those one or more steps, but is not limited to possessing only those one or more steps.

Currently, in order to achieve improved sound damping effects, additional drywall is usually added to an inner wall, ceiling or floor surface, which gives an additional average sound damping effect of several dB. However, not only is more material needed, but the room area or room volume suffers from the additional plasterboard arrangement. The present invention makes a damping assembly possible by the introduction of a resilient fastening arrangement that allows for a thin sound damping wall, ceiling or floor construction.

Experiments performed by the present inventors have shown that damping assemblies in accordance with the present invention, may reduce the sound by several dB in comparison to a common walls, floors or ceilings in which a second structure is rigidly attached to the studwork construction. Measurement has shown a sound damping of several dB in the noise frequency range of 50 Hz to 5000 Hz. This limited frequency range originates from standardized measurement but it has been shown that the sound damping effect may continue beyond 20000 Hz.

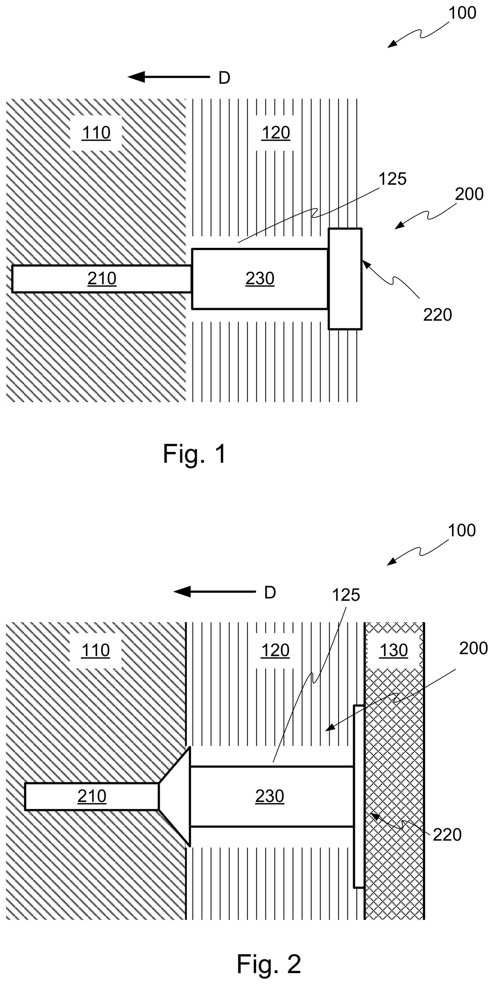

With reference to the schematics depictions of Figs 1 and 2, a resilient fastening arrangement 200 will be introduced. The resilient fastening arrangement 200 is for construction of a vibration damping assembly 100 such a wall, ceiling of floor with sound proofing properties. The damping assembly 100 for reducing vibrations, sound or noise propagation between at least two structures is provided. The damping assembly 100 comprises at least one first structure 110 such as a studwork structure, a load bearing structure or any other suitable structure. The first structure 110 may comprise other structures such as boards, sheets of drywall, MDF, paneling dunnage etc. A second structure 120 is attached to the first structure 110 by means of the resilient fastening arrangement 200 along an arrangement axis D. The resilient fastening arrangement 200 is typically attached to the structures 110, 120 by insertion from the second structure 120 along the arrangement axis D. The arrangement axis D is substantially perpendicular to the structures 110, 120. It should be mentioned that the above exemplified first structures 110 and second structures 120 are typical examples, more specific embodiments are possible, wherein the second structure 120 is a studwork structure or dunnage resiliently fastened to a first structure 110 in the form of e.g. a concrete wall, a studwork structure etc. In such embodiments, it would be recommended to add a sheet material to the second structure 120 as will be explained in coming sections.

The second structure 120 may e.g. be drywall (e.g. plasterboard, wallboard, sheet rock, gypsum board, buster board, custard board, gypsum panel), Medium Density Fiberboard (MDF) board, High Density Fiberboard (HDF), Plywood, chipboard, Oriented Strand Board (OSB) or being of any other sheet of material suitable for an inner ceiling, floor or wall.

The damping assembly 100 comprises at least one first structure 110, the studwork structure, to which the second structure 120 is to be connected. At least one resilient fastening arrangement 200 is provided for resiliently attaching the second structure 120 to the first structure 110.

The resilient fastening arrangement 200 comprises a first part 210 for fixation in and/or on the first structure 110. Typically, and preferably, the first part 210 is fixated in the first structure 110 as shown in Figs. 1 and 2, but it should be emphasized that it may also be e.g. glued or otherwise attached on the first structure 110. It may also be a combination of fixation methods, wherein the first part 210 is fixated to the first structure 110 by both e.g. gluing to a surface of the first structure 110 and in the first structure 110 by e.g. screw threads or a nail structure. The fastening features of the first part 210 will be explained in further detail in the coming sections and exemplified in embodiments.

The resilient fastening arrangement 200 further comprises a second part 220. The second part 220 is configured to engage with the second structure 120. As will be explained further on, this engagement may be in the form of fixation in the second structure 120 but also by attachment or abutment to the second structure 120 by means of e.g. a third structure 130, introduced in Fig. 2.

The resilient fastening arrangement 200 further comprises a third part 230 arranged to resiliently connect the first part 210 to the second part 220. This is accomplished by the third part 230 comprising at least one resilient member 235. The third part 230 is arranged such that the resilient member 235 is provided between the first part 210 and the second part 220. The third part 230 will be further explained in coming sections and the following exemplifying embodiments.

Having Fig. 1 in mind, sound waves propagating along the arrangement axis D and originating from the right side of the second structure 120, the side along the arrangement axis D being distal to the first structure 110, will be absorbed by the second structure 120, as well as by the resilient fastening arrangement 200. From this, the second structure 120 will start oscillating in relation to the first structure 110. Furthermore, ambient atmospheric gas residing between the first structure 110 and the second structure 120, will also act as a dampener for the relative oscillation of the first and second structures 110, 120, thereby reducing sound transport between the first and second structures 110, 120.

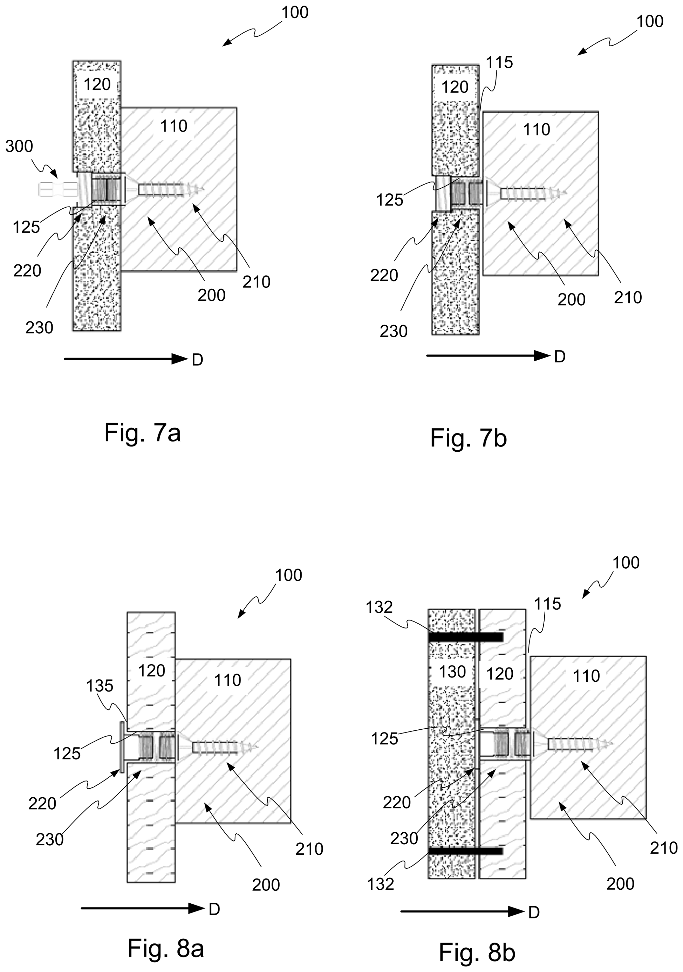

In one embodiment, the first structure 110 and the second structure 120 are only in direct contact with each other via the resilient fastening arrangement 200, the mechanical sound transport between the first structure 110 and the second structure 120 is kept to a minimum. In other words, vibrations of the second structure 120 are transferred to the first structure 110 via the resilient fastening arrangement 200. The resilient member 235 of the third part 230 of the resilient fastening arrangement 200 will dampen this vibration and thereby significantly reduce the amount of vibration that is transferred to the first part 210. Having only the resilient fastening arrangement 200 forming the contact between the structures 110, 120 means that there is a gap 115 (not shown in Fig. 1 but visible in e.g. Fig. 7b) between the first structure 110 and the second structure 120 in the axial direction of the resilient fastening arrangement 200. As will be explained in the coming sections, this gap 115 is the effect of the resilient member 235 of the third part 230. It should be emphasized that albeit the gap 115 improves the sound damping effects of the vibration damping assembly 100, the gap 115 is not essential for the sound damping effects of the vibration damping assembly 100. A vibration damping assembly 100 wherein the second structure 120 is kept at abutment to the first structure 110 by the resilient fastening arrangement 200 will also show significant improvements in sound damping properties compared to a corresponding structure without the vibration damping assembly 200.

For a typical wall construction, a studwork structure is normally attached to a floor foundation and a ceiling (not shown in the drawings). However, in some cases, e.g. where the first structure 110 constitutes an existing concrete wall, an additional studwork structure may typically be attached to the first structure 110. But, given the present invention, the second structure 120 may alternatively be attached directly to a first structure 110 regardless of its material, e.g. concrete, wood etc., by the resilient fastening arrangement 200. For a typical ceiling construction, the studwork structure normally constitutes the floor studwork foundation of the next level of the property. However, it is possible within the scope of the present invention, to attach a further studwork structure to an existing floor studwork foundation structure using resilient fastening arrangement 200 to resiliently attach the further studwork structure, or any other suitable structure to the existing studwork structure when assembling an inner ceiling damping assembly according to the present invention. From the inventive concept detailed herein, and the explanations and embodiments given, the skilled person will understand that the material and construction of the first structure 110 are in no way limiting for this invention. Further to this, the skilled person will, after digestion of the teachings herein, be able to choose the particular material and construction of the second structure 120 from materials and structures not explicitly mentioned herein.

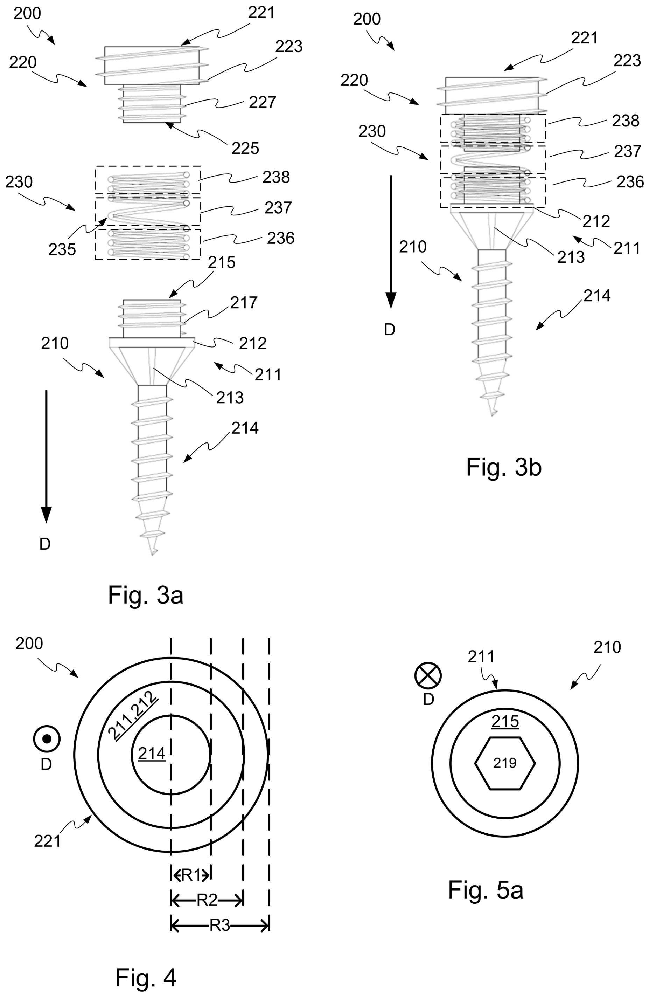

Turning to Fig. 3a and b, a resilient fastening arrangement 200 according to one embodiment will be used to described details and features of the resilient fastening arrangement 200. In Fig. 3a, the resilient fastening arrangement 200 is shown in a view exploded along the arrangement axis D. In Fig 3b, the corresponding resilient fastening arrangement 200 is shown in an assembled or un-exploded view from a direction perpendicular to the arrangement axis D.

The first part 210 is, in this embodiment, shown comprising first part fastening means 214 in the form of first part threads 214. Generally, the first part fastening means 214 are typically adapted to the material of the first structure 110. In other words, if the first structure 110 is wood, the first part fastening means 214 may be a first part thread 214 adapted for wood or a nail adapted for wood. If the first structure 110 is a sheet material such as drywall, the first part fastening means 214 may be in the form of a drywall anchor or molly bolts. A tip of the first part fastening means 214 may be adapted as a drill tip, with a diameter slightly less than a groove related diameter of to the first part thread 214.

As mentioned earlier, the first part 210 is connected to the second part 220 by the third part 230, the second part 220 and the third part 230 will be further detailed below. The third part 230 connects to the first part 210 at a first connection portion 215 of the first part 210. The first connection portion 215 is distal to the first part fastening means 214 along the arrangement axis D. The first connection portion 215 is optionally provided with first connection portion fastening means 217 for correcting the third part 230 to the first part 210. The first connection portion fastening means 217 are, in Fig. 3a, shown as threads but may be any form of suitable connection means e.g. clips, holes etc. Alternatively or additionally, the third part 230 is connectable to the first part 110 by e.g. welding, soldering, gluing etc. The connection of the third part 230 to the first part 210 and the second part 220 will be further explained in coming sections.

Since the first part fastening means 214 is to engage, attach and/or fasten to the first structure 110 it will typically, when used in the construction in a vibrating damping assembly 100, have to penetrate and pass through the second structure 120 in order to reach the first structure 110. This penetration of the second structure 120 will typically result in the hole 125 through the second structure. In order to control the radius of the hole 125 made by the first part 110, the first part 110 may optionally be provided with a piercing means 211. The piercing means 211 is adapted to form the hole 125 in the second structure 120 and may optionally be adapted to form a hole 125 in the first structure 110. The piercing means 211 may be formed as cutting means 213 adapted to form the hole 125 by cutting/milling through the second structure 120 or the second structure 120 and the first structure 110. The piercing means 211 may additionally or alternatively be formed to have a wedging function, pushing the material of the second structure 120 or the second structure 120 and the first structure 110 substantially radially to the arrangement axis D. The benefits of the piercing means 211 will be further detailed below together with several different embodiments of the piercing means 211. It should be mentioned that the different embodiments of the piercing means 211 may very well be combined with one another as will be understood by the skilled person.

The first part 210 is optionally provided with an, in relation to the arrangement axis D, radially protruding flange portion 212. The flange portion 212 is arranged such that the first connection portion 215 is between the flange portion 212 and the second part 220. Typically, the flange portion 212 is, along the arrangement axis D, adjacent to a side of the connection portion 215 that is distal to the second part 220. The flange portion 212 will protect the resilient member 235 when the resilient fastening arrangement 200 is inserted into the vibration damping assembly 100 during construction of the vibration damping assembly 100. The flange portion 212 efficiently protects the resilient member 235 from dust, dirt, debris, pollution or other forms of contamination that may obstruct or reduce the resilience of the resilient member 235. Further to this, the flange portion 212 may function to keep the third 230 part located between the first part 210 and the second part 220, i.e. stop the third part 230 from sliding of the first part 210. The flange portion 212 further protects the third part 230 and the resilient member 235 from damage resulting from e.g. scratching, squeezing, cutting etc. of the resilient fastening arrangement 200 during e.g. use in construction and storage. In embodiments of the vibration damping assembly 100, the first structure 110 may be of a material which the piercing means 211 have trouble penetrating, e.g. metal structures. In such cases, the flange portion 212 may be arranged to come into contact with a surface of the first structure 110 facing the second structure 120 when the resilient fastening arrangement 200 is fastened to the first structure 110 and the second structure 120. One effect of the flange portion 212 is that it may assist in ensuring that the first portion 210 is inserted long enough into to the first structure 110.

In Fig. 3a, the piercing means 211 are shown in contact with the flange portion 212. This is but one embodiment and the piercing means may be placed further away along the arrangement axis D from the second part 220 such that there is a distance between the piercing means 211 and the flange portion 212. In some embodiments, the piercing means are reamers or arranged as in relation to the arrangement axis D radial chamfers on a side of the flange portion 212 facing away from the second part 220.

In the embodiment of Fig. 3a, the second part 220 comprises a second connection portion 225 for connecting the second part 220 to the third part 230. The second connection portion 225 is distal to the first part 210 along the arrangement axis D. The second connection portion 225 is optionally provided with second connection portion fastening means 227 for connecting the third part 230 to the second part 220. The second connection portion fastening means 227 are, in Fig. 3a, shown as threads but may be any form of suitable connection means e.g. clips, holes etc. Alternatively or additionally, the third part 230 is connectable to the second part 220, or the second connection portion 225, by e.g. welding, soldering, gluing etc. The second connection portion 225 may, as in Fig. 4a, be formed in the same or similar manner as the first connection portion 215, but this is optional and the connection portions 215, 225 may very well be differently formed. The connection of the third part 230 to the second part 220 and the first part 210 will be further explained in coming sections.

The second part 220 further comprises a head portion 221. The head portion 221 is, along the arrangement axis D, distal to the second connection portion 225. The head portion 221 is the part of the resilient fastening arrangement 200 arranged closest to a surface of the second structure 120 facing away from the first structure 110 when the resilient fastening arrangement 200 is used in a vibrating damping assembly 100. In this embodiment of the resilient fastening arrangement 200, the second part 220 is configured to be fixated in the second structure 120. This is accomplished by the head portion 221 being provided with head portion connection means 223. The head portion connection means 223 are adapted to engage with circumferential edges of the hole 125 of the second structure 120, in Figs. 3a-b by the means of threads 223.

The third part 230 of the resilient fastening arrangement 200 comprises the resilient member 235. The resilient member 235 can be sectioned into three regions 236, 237, 238 wherein a core region 237 is arranged between two end regions 236, 238. The end regions 236, 238 are configured to engage with the respective first and second connections portions 215, 225 of the first and second parts 210, 220. From this follows, based in the description above, that the end regions 236, 238 may be formed in the same or different ways depending on the configuration of the corresponding connection portions 215, 225. The resilient member 235 may be formed such that its spring rate along the arrangement axis D is different in the different regions 236, 237, 238. Preferably, the spring rate along the arrangement axis D is lower in the core region 237 than in the end regions 236, 238. Lower spring rate is to mean that it requires less force along the arrangement axis D to compress or extend the resilient member 235 at the core region 237 than at the end regions 236, 238, i.e. an axial stiffness is lower. The resilience of the resilient member 235 is such that it will revert back to its original shape when a force along the arrangement axis D is removed. This arrangement of the relative spring rates of the resilient member 235 is very beneficial since it allows for control of the compression of the resilient member 235 and reduces a risk that the end regions 236, 238 disengage from their respective connection portions 215, 225 during construction of the vibration damping assembly 100 or when the vibration damping assembly 100 is exerted to vibrations.

In the embodiment of Figs. 3a-b, the resilient member 235 is embodied as a coil spring 235. Using a coil spring 235 as the resilient member 235 is beneficial since it allows for numerous alternatives for secure and fast attachment to the first part 210 and the second part 220 respectively. A longitudinal axis of the spring 235 is arranged along the arrangement axis D. The lower spring rate in the core region 237 of the spring 235 may me accomplish by configuring the spring 235 as a variable pitch spring. This means that, in embodiments of the present invention, the resilient member 235 is configured to have higher winding pitch, i.e. further spacing between its windings, in the core region 237 compared to the end regions 236, 238. Assuming that all regions 236, 237, 238 have the same extension along the arrangement axis D, this would mean that the spring 235 has more windings in each of the end regions 236, 238 compared to the core region 237. Alternatively or additionally, similar effect may be achieved by constructing the spring from different materials.

The inventors behind this disclosure have further realized that forming the resilient member 235 in the form of a spring 235 will allow the end regions 236, 238 of the spring to, when the first and second connection portion fastening means 217, 227 are in the form of threading, directly engage and attach to the threading of the connecting portions 215, 225 of the first and second part 210, 220 respectively. Further to this, a thread pitch of the first and second connection portion fastening means 217, 227 may be dimensioned such that it is larger than the spring pitch, i.e. the axial spacing of the windings, of the spring 235 at its end regions 236, 238 causing the windings of the spring 235 at its end regions 235 to be forced apart when the spring 235 is attached to the first and second connection portion fastening means 217, 227. Additionally, a thickness of a wire of the spring 235 may be dimensioned to control the spring pitch, spring pitch is to mean the distance from one coil winding to the next along the arrangement axis D, the measuring point is between center points of the wire. Preferably, the spring pitch and the first and second connection portion fastening means 217, 227 are dimensioned to bias the spring 235 when it is attached to the first and second connection portion fastening means 217, 227. The resilience of the spring 235 will cause the spring 235 to grip the threads of the first and second connection portion fastening means 217, 227 resulting in a tighter and more secure attachment of the spring 235 to the first and second part 210, 220 respectively. In this embodiment, the effect of the spring 235 at its end regions 236, 238 may be describes as that of a torsion spring and the effect of the spring in the core regions may be described as that of a tension/extension or compression spring.

It should be mentioned that, albeit shown as three separate parts 210, 220, 230 as in the exploded view of Fig. 3a, and assembled in Fig 3b, the resilient fastening arrangement 200 may very well be formed from one or two parts wherein two or all of the parts 210, 220, 230 listed above are formed as one.

Turning to Fig. 4, a schematic front view of the resilient fastening arrangement 200 of a typical embodiment is shown. The views in Fig. 4 is from the first part 210 of the resilient fastening arrangement along the arrangement axis D. From Fig 4, three parts of the resilient fastening arrangement 200 are visible, the first part fastening means 214, the piercing means 211 of the first part 210 and the head portion 221 of the second part. The first part fastening means 214 has a maximum part fastening means radius R1, the piercing means 211 has a maximum piercing means radius R2 and the head portion 221 has a maximum head portion radius R3. For the sake of understanding, it should be mentioned that the term maximum radius is to mean the maximum radius of an object including e.g. threads where applicable. From the details given with reference to Figs 3a-b, a maximum radius of the first part 210 is the maximum piercing means radius R2 if the first part 210 comprises piercing means 211, otherwise it will be maximum radius of the first part fastening means 214, the maximum radius of the first connecting portion 215 or preferably, if present, a maximum radius of the flange portion 212. In this embodiment, a maximum radius of the second part is the maximum head portion radius R3, but is may very well be that the maximum head portion radius R3 is smaller than a maximum radius of the second connecting portion 225. However, in a preferred embodiment, the resilient fastening arrangement is formed such that the radiuses R1, R2, R3 are as shown in Fig. 4. This means that the maximum radius of first part 210 is smaller than the maximum radius of the second part 220. Further, a maximum radius of the third part 230 is smaller than the maximum radius of the first part 210. There are several benefits of such an arrangement, e.g. the third part 230 is protected by the first part 210 during fastening of the resilient fastening arrangement 200 when constructing the vibration damping assembly 100. In embodiments of the vibration damping assembly 100 wherein the third part 230 partially extends within the hole 125 of one or more of the structures 110, 120, the hole 125 can be formed by the piercing means 211 during the fastening of the resilient fastening arrangement 200 when constructing the vibration damping assembly 100. The vibration damping assembly 100 may be assembled without having to pre-drill the hole 125 resulting in a much faster and more efficient construction process.

Turning to Figs. 5a-c, a back view of the resilient fastening arrangement 200 and part of the resilient fastening arrangement 200 according to embodiments of the invention is shown. The views in Figs. 5a-c are from the second part 220 of the resilient fastening arrangement 200 along the arrangement axis D. Starting with Fig. 5a, the first part 210 is shown comprising an optional first tool engagement portion 219. The first tool engagement portion 219 is to be engaged by a tool 300, specific embodiments will be detailed in coming sections, during the fastening of the resilient fastening arrangement 200 in the construction of the vibration damping assembly 100. The first tool engagement portion 219 is typically located substantially central on the first connection portion 215. The first tool engagement portion 219 may be formed either to extend along the arrangement axis D away from the first part fastening means 214, i.e. as an axial protrusion on the first part 210 or to extend into the first connection portion 215 towards, and optionally into, he first part fastening means 214 along the arrangement axis D, i.e. as an axial hole in the first part 210. The first tool engagement portion 219 may be formed with any suitable circumferential shape suitable for engagement with tools e.g. shaped as a socket head cap grip or with other geometries.

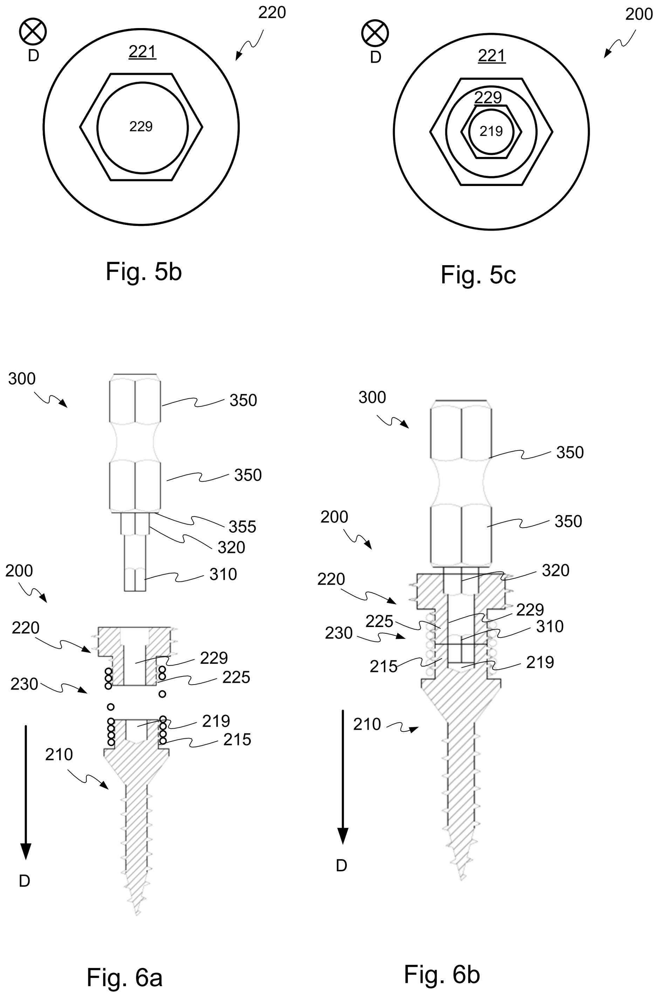

Turning to Fig. 5b, depicted is a back view of the second part 220 looking into the head portion 221 towards the second connection portion 225 along the arrangement axis D. The head portion 225 of the second part 220 is provided with a second tool engagement portion 229. The second tool engagement portion 229 is to be engaged by the tool 300, specific embodiments will be detailed in coming sections, during the fastening of the resilient fastening arrangement 200 in the construction of the vibration damping assembly 100. The second tool engagement portion 229 is preferably formed as an axial through hole extending through the entire second part 220 along the arrangement axis D. The second tool engagement portion 229 is preferably located substantially centered in relation to the head portion 225. The second tool engagement portion 229 may be formed with any suitable circumferential shape suitable for engagement with tools e.g. shaped as a socket head cap grip or with other geometries.

Fig. 5c shows a back view of the resilient fastening arrangement 200 looking into the head portion 221 of the second part 220 towards the first part 210 along the arrangement axis D. The second tool engagement portion 229 is, in this embodiment formed with an area in a radial plane that it larger than the corresponding area of the first tool engagement portion 219. This makes is possible to form a tool 300 that can engage both the first and second tool engagement portions 219, 229 at the same time from the head portion 221 of the second part 220.

With reference to Fig. 6a-b, a tool 300 for fastening of the resilient fastening arrangement 200 according to one embodiment will be described. The tool 300 is, in this embodiment, formed as a bit for e.g. a screwdriver, a suitable power tool etc. The tool 300 comprises a tool connection portion 350 for connecting the tool to e.g. the suitable power tool. Further to this, the tool 300 comprises a first part engagement portion 310 configured to engage with the first tool engagement portion 219 of the first part 210 of the resilient fastening arrangement 200. A second part engagement portion 320 is also comprised in the tool and is configured to engage with the second tool engagement portion 229 of the second part 220 of the resilient fastening arrangement 200. In Fig. 6b, the tool 300 is engaging the first tool engagement portion 219 with its first part engagement portion 310 by extending through second part 210 of the resilient fastening arrangement 200. A distance, along the arrangement axis D, between the first part engagement portion 310 and the second part engagement portion 320 is configured such that the second part engagement portion 320 engages the second tool engagement portion, when the tool 300 is engaging the first tool engagement portion 219 with its first part engagement portion 310 by extending through second part 210 of the resilient fastening arrangement 200.

The tool connection portion 350 of the tool 300 is typically formed with an axial circumference that is larger than a corresponding circumference of the second part connection portion 320. As a result, the tool 300 can be dimensioned such that a face 355 of the tool connection portion 350 facing the resilient fastening arrangement 200 when the tool 300 is engaging the resilient fastening arrangement 200, will contact the head portion 221 of the second part 220. When the tool 300 is pushed into the resilient fastening arrangement 200 to engage the first tool engagement portion 219, the resilient member 235 of the third part is compressed along the arrangement axis D, decreasing an axial distance between the first part 210 and the second part 220. This is schematically shown in Fig. 6b wherein the second part 220 and the first part are illustrated as abutting at their respective connecting portions 215, 225. This compression of the resilient member 235 along the arrangement axis D during construction of the vibration damping assembly 100 causes biasing of the resilient member 235.

With the assistance of Figs. 7a-b, the effect of biasing the resilient member 235 will be explained. Starting with Fig. 7a, when the tool 300 is used to bias the resilient member 235 of the resilient fastening arrangement 200 during construction of the vibration damping assembly 100, the second structure 120 will be pushed (tightly) up against the first structure 110 in the direction of the arrangement axis D. Turning to Fig. 7b, when the resilient fastening arrangement 200 is fastened in the vibration damping assembly 100, the tool 300 is removed, and with it the force biasing the resilient member 235. The resilient member 235 will revert back to a resting state as the biasing force is removed. The first part 210 is fixated in the first structure 110 and the second part 220 is, in this embodiment, by the head portion connection means 223, fixated in the circumference in the hole 125 of the second structure. As a result, when the biasing force is removed, the second structure 120 will be pushed back from the first structure 110 such that a gap 115 is formed between the first structure 110 and the second structure 120 along the arrangement axis D. This gap 115 reduces direct contact between the first structure 110 and the second structure 120 directing vibrations, i.e. sound, travelling, along the arrangement axis D, from one side of the vibration damping assembly 100 to the other side of the vibration damping assembly 100, through the resilient member 235 which efficiently dampens the vibrations.

In the previous exemplifying embodiment, a biasing force was applied using the tool 300, but, as will be explained with reference to Figs. 8a-d, the present invention is not limited to this embodiment and other embodiments of the vibration damping assembly 100 and the resilient fastening arrangement 200 are comprised in the present inventive concept. The resilient fastening arrangements 200 shown in Figs 8a-d are formed without the head portion connection means 223 such that the second part 220 is not attached to the second structure 120. It may be that the second part 220 is provided with the head portion connection means 223 but they are e.g. not adapted for the second structure and/or the hole 125 in the second structure 120 has a diameter that is larger than a diameter of the head portion connection means 223 such that the head portion connection means 223 cannot engage the circumference of the hole 125. The end result of this may be that the head portion connection means 223 come loose from the second structure 120

Starting from Fig. 8a, the first part 210 of the resilient fastening arrangement 200 is fixated to the first structure 110 and the second part 210 is arranged such that a biasing gap 135 is formed between the head portion 221 and the face of the second structure 120 facing away from the first structure 110 along the arrangement axis D. The head portion 221 of the second part 220 is, in this embodiment, formed to have a diameter, measured substantially perpendicular to the arrangement axis D, that is larger than a corresponding diameter of the hole 125.

As mentioned earlier, the biasing gap 135 is optional and the following is one exemplary embodiment wherein the biasing gap 135 is present. The biasing gap 135 may be formed by stopping the arranging of the resilient fastening arrangement 200 in the vibrating damping assembly 100 before the head portion 221 comes into contacts the face of the second structure 120 facing away from the first structure 110 along the arrangement axis D. This may be simplified by the introduction of a distancing member (not shown) between the head portion 221 and the face of the second structure 120 facing away from the first structure 110 along the arrangement axis D. This distancing member would preferably be formed to have an extension along the arrangement axis D that is substantially equal to a corresponding desired extension of the biasing gap 135.

In order to close the biasing gap 135, the third structure 130 may be fixated to the second structure 120 such that the second structure is sandwiched between the first structure 110 and the third structure 130, shown in Fig. 8b. As the third structure 130 is fixated to the second structure 120, the resilient member 235 of the third part 230 will be compressed along the arrangement axis D, efficiently closing the biasing gap 135 by pushing the head portion 221 of the second part 220 to come into contact with the face of the second structure 120 facing away from the first structure 110 along the arrangement axis D. As a force, along the arrangement axis D, used during the fixation of the third structure 130 to the second structure 120 is removed, i.e. when the third part 130 is fixed to the second part 120, the resilient member 235 will, as in the embodiment described with reference to Figs. 7a-b, revert back to its idle state along the arrangement axis D, i.e. its uncompressed state. The first part 210 of the resilient fastening arrangement 210 is fixated in the first structure 110 and as the resilient member 235 reverts back to its idle state, it will cause the head portion 221 of the second part to push the third structure 130 away from the first structure 110 along the arrangement axis D. As the third structure 130 is fixated to the second structure 120, the second structure 120 will also be pushed away from the first structure 110 along the arrangement axis D such that the gap 115 is formed between the first structure 110 and the second structure 120. The extension of the gap 115 along the arrangement axis D will be substantially the same as the extension exhibited by the biasing gap 135 along the arrangement axis D.

Alternatively, the resilient fastening arrangement 200 may be used to fasten the second structure 120 to the first structure 110 and the fastening arrangement 200 may be inserted into the first structure 110 and the second structure 120 until the side of the head portion 221 facing away from the first part 210 along the arrangement axis is substantially flush with the face of the second structure 120 facing away from the first structure 110 along the arrangement axis D. The third structure 130 may then be fastened to the second structure 120 without having a controlled biasing gap 135 between the structures 110, 120, 130.

The fastening of the third structure 130 to the second structure may be accomplished by any suitable third part fastening means 132, e.g. screws, nails, adhesives etc.

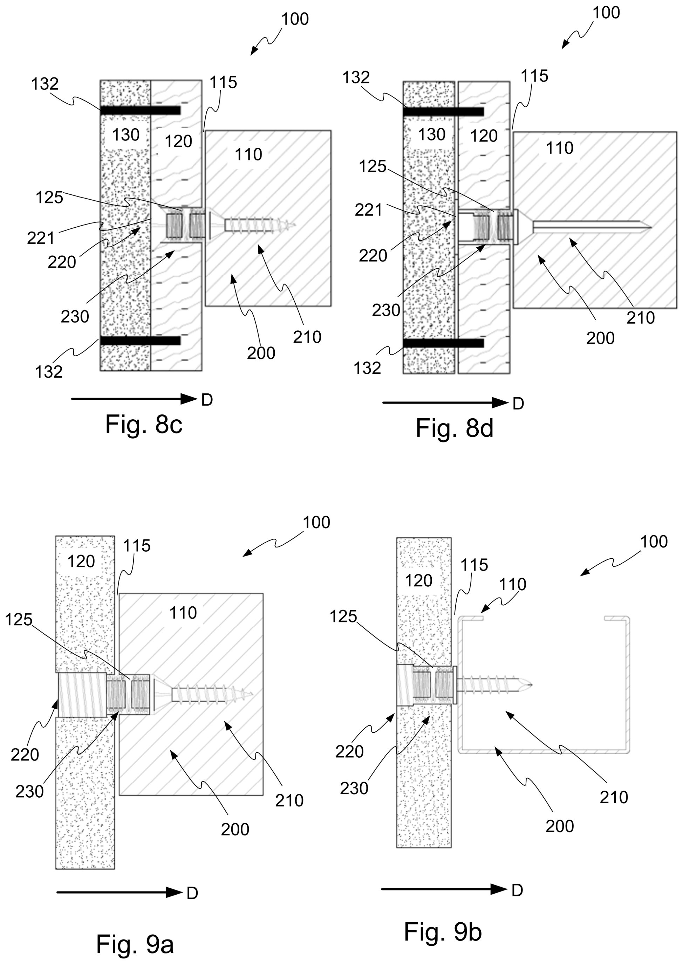

In Fig. 8c, an alternative embodiment of the vibration damping assembly 100 is shown. In this embodiment, the head portion 221 of the second part 210 is formed with an, in a direction away from the first part 210 along the arrangement axis D, increasing radius such that an end of the head portion 221 may be arranged flush with the face of the second structure 120 facing away from the first structure 110. In the embodiment in Fig. 8c, the head portion 221 extends into the second structure 120.

Fig. 8d illustrates an alternative embodiment of the vibration damping assembly 100. Here, the first part 210 of the resilient fastening arrangement 200 is formed as a nail. This is beneficial since tools such as nail guns may be used when constructing the vibration damping assembly which will further reduce the time and cost of assembly.

It should be noted that the different embodiments of the resilient fastening arrangement 200 that has been shown, and that will be shown, are possible to combine in virtually any combination thinkable. For instance, the first part 210 of the resilient fastening arrangement 200 in Fig. 8d may very well be used with the second and third parts 220, 230 of the resilient fastening arrangement 200 shown in Fig. 8c. The tool 300 may still be utilized but engaged with a hammer or similar rather than a screwdriver.

One purpose of the hole 125 is to accommodate the third part 230 and the resilient member 235. From Fig. 4, we learned that the maximum radius of the third part 230 is less that the corresponding radiuses of the first part 210 and the second part 220. In addition to this, the hole 125 is formed to have a radius that allows the resilient member 235 of the third part 230 to move, i.e. extend and compress, along the arrangement axis D substantially unhindered by circumferential edges of the hole 235.

The first part 210 and the second part 220 of the resilient fastening arrangement may be solely connected, i.e. interconnected, by means of the third part 230. The first part 210 and the second part 220 may be connected solely by means of the resilient member 235 of the third part 230. The first part 210 and the second part 220 may in one embodiment be solely connected by means of the core region 237 of the resilient member 235. In one embodiment, an axial portion of the resilient fastening arrangement 200 extending along the arrangement axis D only constituted by the resilient member 235 is arranged to at least partially extend within the hole 125 of the first and/or second structure. Thus, the resilient member 235 is arranged to extend through a portion of said hole 125 not being in contact with and/or engaging with the first part 210 and the second part 220 of the resilient fastening arrangement 200. Thus, the first part 210 and the second part 220 are adapted to not be in contact with the interior wall of the portion of the hole 125 within which the aforementioned axial portion of the resilient member 235 extends. Said axial portion of the resilient member 235 may thus be arranged to not be in contact with the first structure 110 and the second structure 120. In one embodiment, the resilient member 235 may be adapted to bias the first part 210 and second part 220 relative each other to achieve a space along the arrangement axis D between said first and second part. Said space is arranged to at least partially extend within the hole 125 of said first and/or second part. Thus, said space is arranged to at least partially extend within the hole 125 of said first and/or second part when the first part 210 is fixed to the first structure 110 and the second part 220 is fixed to the second structure 120. Worded differently, the aforementioned axial portion may be arranged between the first part 210 and the second part 220 along the arrangement axis D.

The hole 125, have, in embodiments, been shown as a through hole of the second structure 120. It has been mentioned that the hole 125 may be formed by the piercing means 211 of the first part 210 of the resilient fastening arrangement 200. Alternatively or additionally, the hole 125, or part of the hole 125, may be pre-formed by e.g. drilling or have the structure(s) 110, 120 manufactured with holes 125 etc. In Fig. 9a, one embodiment of the vibration damping assembly 100 is shown wherein the hole 125 is formed to extend through the second structure 120 and further into the first structure 110. This arrangement is beneficial since a region wherein the second part 220 may engage with circumferential edges of the hole 125 in the second structure 120 increase compared to embodiments wherein substantially the entire third part, or at least the resilient member 235, are accommodated by the hole 125 in the second structure 120.

Turning to Fig. 9b, one embodiment of the vibration damping assembly 100 is shown wherein the first structure 110 comprises metal beams/studs or any other hollow structure unsuitable for forming the hole 125. In such embodiments of the vibration damping assembly 100, the hole 125 is preferably formed in the second structure 120 but it should be emphasized that not the entire third part 230 and/or the entire resilient member 235 needs to be accommodated in the hole 125. It is possible, in any embodiment, to arrange part of the third part 230 and/or the resilient member 235 in the gap 115 and consequently, if necessary, increase the distance between the first structure 110 and the second structure 120.

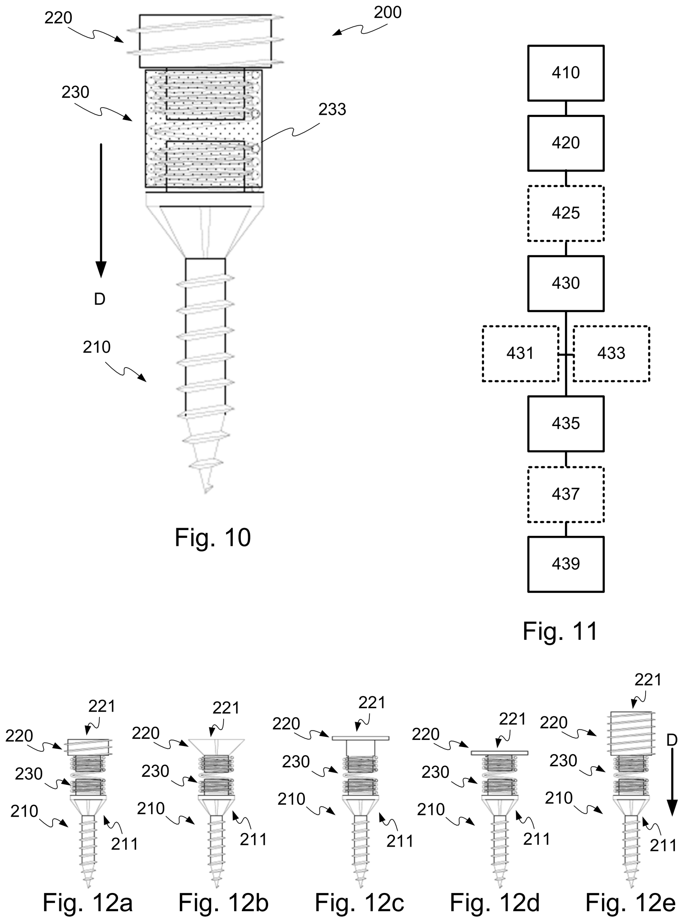

There may be a risk that the resilient member 235 of the third part 230 of the resilient fastening arrangement 200 is subjected to e.g. dust, dirt, debris, pollution or other forms of contamination that may obstruct or reduce the resilience of the resilient member 235. In order to mitigate this risk, the third part 230 may be arranged to comprise a sleeve 233 or collar 233 arranged to protect the resilient member 235 from contamination, see Fig 10. The sleeve 233 may be of a tubular shape and arranged about the entire or a part of the third part 230 along the arrangement axis D. In embodiments, the sleeve 233 is arranged to at least partly, along the arrangement axis D, surround the resilient member 235. Preferably, the sleeve 233 is, along the arrangement axis D, shorter than a distance between the first part 210 and the second part 220 such that the sleeve 233 does not restrict the compression of the resilient member 235 by being squeezed between the first part 210 and the second part 220. The sleeve 233 may be formed from any suitable material or materials e.g. plastic, paper, metal etc. Preferably, the sleeve 233 is arranged to cover at least the core region 237 of the resilient member 235. The sleeve 233 may further be formed as an integral part of the first part 210 and/or the second part 220.

Turning to Fig. 11, a method 400 for constructing a vibration damping assembly 100 will be introduced. The method 400 is based on providing 410 a first structure 110. This first structure 110 may be any first structure 110 mentioned herein, and is typically a supporting section in the form of e.g. a studded section. As is understood from this disclosure, the second structure 120 is arranged, preferably firmly, against the first structure 110.

Further to this, the method comprises providing 420 a second structure 120. This second structure 120 may be any second structure 120 mentioned herein, and is typically in the form of a sheet material such as drywall or even metal.

The second section 120 is resiliently fastened to the first structure 110 by arranging 430 a resilient fastening arrangement 200 such that the first part 210 of the resilient fastening arrangement is fixated to and/or in the first structure 110. The second part 220 of the resilient fastening arrangement 200 is arranged to engage second the structure 120.

It should already now be mentioned, that the first section 110 may be from any suitable material, and the skilled person will, after digesting the teachings herein, know what embodiment(s) of the resilient fastening arrangements 200 that are suitable for each particular combination of first structures 110, second structures 120 and the optional third structure 130.

During the arranging 430 of the resilient fastening arrangement 200, the method 400 comprises subjecting 435 the resilient fastening arrangement 200 to an axial force along the arrangement axis D such that the resilient member 235 is biased between the first structure 110 and the second structure 120. As disclosed previously, this may be accomplished by e.g. the tool 300 described with reference to Figs. 6a-b or by the third structure 130 as described with reference to Figs. 8a-b. Accordingly, the axial force may be an axial force causing compression of the resilient member of the third part. Thus, the axial force may cause compression of the resilient member of the third part along the arrangement axis D. In one embodiment, the axial force may be provided by means of pushing of the second structure 120 in the direction of and/or against the first structure 110.

In order to conclude the arranging 430 of the resilient fastening arrangement 200, the axial force is removed 439 such that the resilient member 235 is no longer biased by the provided axial force between the first structure 110 and the second structure 120. This may be accomplished by e.g. removing the tool 300, removing a force exerted on the second structure or optionally if applicable, removing a force exerted on the third structure 130 during fastening of the third structure 130 - if the optional third structure 130 is used.

The method 400 may optionally comprise the step of, during the arranging 430 of the resilient fastening arrangement, arranging 433 the third part 230 such that is at least partly arranged in a hole 125 of the first structure 110 and/or the second structure 120. Please refer back to e.g. the description referring to Figs. 9a-b for further details and benefits of the hole 125.

The method 400 may optionally comprise a step of forming 425 a through-hole 125 in the second structure 120 before the step op arranging 430 the resilient fastening arrangement 200.

Alternatively, the through-hole 125 may be formed 431 by means of the first part 210 during the arranging 430 of the resilient fastening arrangement 200. This may be done by e.g. the piercing means 211 and/or the cutting means 213.

The arranging 430 of the resilient fastening arrangement 200 may optionally comprise rotating 437 the resilient fastening element 200. This may mean using e.g. a screwdriver to arrange 430 the resilient fastening arrangement 200.

The step arranging 430 may be performed until an end section, e.g. of the head portion 221, of the second part 120 of the resilient fastening arrangement 200 is substantially flush with the face of the second structure 120 facing away from the first structure 110 along the arrangement axis D.

As has been explained, e.g. with reference to Fig. 8b, the step of subjecting 435 the resilient fastening arrangement 200 to an axial force along the arrangement axis D such that the resilient member 235 is biased between the first structure 110 and the second structure 120, may optionally comprise fixating 437 a third structure 130. The third structure 130 is fixated 437 such that the second structure 120 is sandwiched between the first structure 110 and the third structure 130.

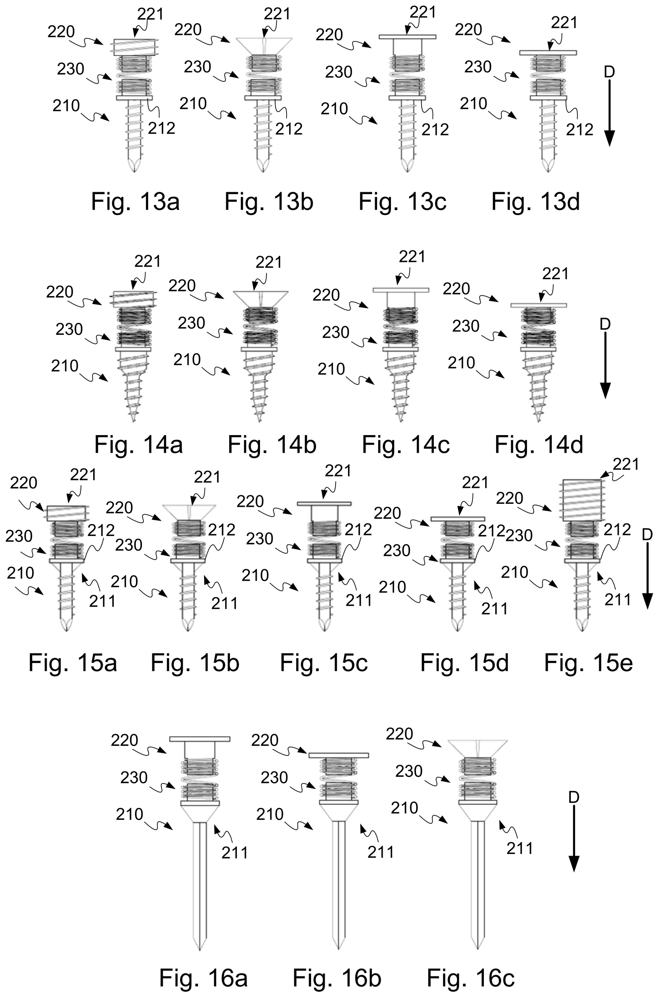

In the coming sections exemplary embodiments of the resilient fastening arrangement 200 will be introduce with reference to Figs. 12-16. Each of these Figs. introduce one embodiment configured for specific combinations of materials and structures the first structure 110 and the second structure 120. Albeit several embodiments are introduced, no statement of completeness is made and these embodiments are presented to exemplify the breadth of the inventive concept and are not to be interpreted as liming to the invention. The structure of the coming embodiments are that of a matrix structure where all embodiments presented with reference to Fig. 12, i.e. Fig. 12a-e, comprise the same first part 210. Different first parts 210 are introduced with reference to Figs. 13, 14 and 15 respectively but they are the same for all references to Figs 13, 14 and 15 respectively, i.e. Figs. 13a-d, Figs 14a-d and Figs. 15a-e. Each letter, i.e. a, b, c, d or e introduce a specific second part 220 and these second part 220 are the same for respective letter in each of the Figs. 12-15, i.e. the second parts 220 are the same in the embodiments of Figs. 12c, 13c ,14c and 15c. The third part 230 is the same for all embodiments of Figs. 12-15 and all embodiments are arranged along the same arrangement axis D.

Starting with Figs. 12a-e, a series of embodiments are introduced wherein the first part 210 is formed with a thread adapted for soft materials such as wood or drywall. The first part 210 is further provided with piercing means 211 for forming of the hole 125 in the second structure 120 or in the second structure 120 and the first structure 110.

Focusing on the second part 220 in Fig. 12a, i.e. same second part 220 as in Figs. 13a ,14a and 15a, the head portion 221 is provided with head portion connection means 223 in the form of threads 223 suitable for fixation in hole 125 of the second structure 120. The extension of the head portion connection means 223 along the arrangement axis is comparably short which makes is suitable for a material of the second structure 120 that is comparably solid, e.g. metal, wood, fiber wood such as MDF, HDF etc.

Turning to Fig. 12b and the second part 220 of this embodiments, i.e. same second part 220 as in Figs. 13b, 14b and 15b, the head portion 221 is provided with an, in a direction away from the first part 210 along the arrangement axis D, increasing radius such that an end of the head portion 221 may be arranged flush with the face of the second structure 120 facing away from the first structure 110. This makes it suitable for second structures 120 of comparably soft material e.g. drywall, softboard etc. This head portion 221 is not provided with any head portion connection means 223 making it suitable for use where other means are used to attach the second part 220 to the second structure 120, e.g. adhesives and/or the third structure 130. The head portion 221 may optionally be provided with piercing means similar to those exemplified with reference to the first part 210 in order to allow the head portion 221 to easier penetrate and submerge into the second structure 120.

In the second part 220 shown in Fig. 12c, i.e. same second part 220 as in Figs. 13c, 14c and 15c, the head portion 211 is substantially flat, without head portion connection means 223 and comparably thin but distanced from the third part 230. This makes it suitable for second structures 120 where it is difficult or impossible to force the head portion 211 into the second structure 120 e.g. second structures of metal, tile etc. This head portion 221 is not provided with any head portion connection means 223 which makes it suitable for use where other means are used to attach the second part 220 to the second structure 120, e.g. adhesives and/or the third structure 130.

The second 220 part of Fig. 12d, i.e. same second part 220 as in Figs. 13d, 14d and 15d is similar to the second part 220 of Fig. 12c with the exception of the distance, along the arrangement axis D, from the head portion 211 to the third part 230 is shorter in this embodiment. The difference in this distance illustrates that the configuration of the second part 220 may be adapted for different thickness of the second structure 120 and/or different depths of the hole 125 in the first structure 125. This head portion 221 is not provided with any head portion connection means 223 making it suitable for use where other means are used to attach the second part 220 to the second structure 120, e.g. adhesives and/or the third structure 130. Compared to the head portion depicted in Fig. 12c, the dimension of the head portion 211 makes the resilient fixating arrangement more suitable for use with a thinner second structure.

Referencing Figs. 12b-d , each of the depicted head portions is suitable in cases where there is a risk for threading not to properly engage the second structure, such as when the second structure is in a hard material, a material which easily crumbles apart or a very soft material. Further, said head portions are generally suitable for thinner second structures due to the dimensions of the resilient fixating arrangement.

The second part 220 introduced in Fig. 12e, i.e. same second part 220 as in Fig. 15e, comprises a head portion 211 with head portion connection means 223 extending, along the arrangement direction D, comparably far, compare to e.g. Fig. 12a. This makes is suitable for use with second sections 120 comprising comparably soft material e.g. drywall, softboard where it is desired to have the head portion connection means 223 engaging substantially the entire length, along the arrangement direction D, of the through-hole 125 in the second structure 120. In order to keep the gap 115 limited, the third part 230 is preferably arranged in the hole 125 of the first part 120, e.g. Fig. 9a. Consequently, this particular embodiment is less suitable for vibrating damping assemblies 100 wherein the first structure 110 is a hollow material, e.g. Fig. 9b, or any other material unsuitable for forming a hole 125.

Further, the head portion connection means 223 makes the embodiment depicted in Fig. 12a as well as Fig. 12e particularly suitable for use with a second structure in the form of a drywall (or softboard). This due to the head portion connection means 223 being capable to engage for example a drywall in a desirable manner.

Notably, each of the resilient fixating arrangements, i.e. head portions, depicted in Figs. 12a-e may still be reliably be used for different types of second structures such as for example drywalls. For example, in cases where the engagement and/or fixation to the second structure is to be reinforced the previously described third structure or a layer suitable for engaging the second part on the second structure may be utilized.

Focusing again on the first part 210 and directing focus to Figs. 13a-d, the first part 210 in these embodiments is provided with a drill tip. This drill tip is suitable for drilling through hard materials such as metal. Consequently, these embodiments of the first part 210 are not provided with any piercing means 211 clearly visible from the side view of Figs. 13a-d. This makes these embodiments suitable for vibrating damping assemblies 100 wherein the hole 125 is pre-formed in the second structure 120 and or in the second structure 120 and first structure 110. The embodiments in Fig. 13a-d may very well be provided with piercing means 211 on the face of the flange portion 212 facing away from the second part 220 along the arrangement axis D.

In Figs. 14a-d, an embodiment of the first part 210 wherein the radius of a section of the first part 210 is gradient along the arrangement axis D. The radius of the first part 210 is larger at a region closer to the second part 220 than at a region distal to the second part 220. These, in this embodiment, two but it may very well be more, distinct radiuses are suitable for securely fixating the first part 210 in the first structure 110 without undue burden. The function of the smaller radius of the first part 210 may be compared to that of pre-drilling a smaller hole before drilling a hole with a desired size. The gradient radius will create the hole 125 by gradually increasing a radius of the hole 125. The flange portion 212 may be configured to trim e.g. burrs occurring from the creation of the hole 125. The larger radius section of the first part 210 will fixate to the first structure 110 with increased force compared to a fixation force a smaller radius section. This embodiment of the first part 210 is especially beneficial when the first structure 110 is a hollow metal structure, Fig. 9b, since the metal will wrap tightly about the first part 210.

Figs. 15a-e illustrate an embodiment of the first part 210 wherein the piercing means 211 is formed as cutting wings connected to the flange portion 212. These cutting wings are very well adapted for forming the hole 125 in structures 110, 120 from e.g. wood or metal.

Turning now to Figs. 16a-c, the matrix structure of the embodiments is somewhat abandoned. In these embodiments, the first part 210 is formed as a nail which makes it less suitable to be combined with a second part 220 comprising threads 223 as head portion connection means 223. The first part 210 is provided with piercing means 211 in the form of a gradient wedge with its largest radius closest to the second part. Depending on the softness of the second structure 120 and the force with which the resilient fastening arrangement 200 is pushed into the vibration damping assembly 100, this piercing means 211 may be used to form the hole in the second structure 120. It may be, that the hole is pre-drilled in the second structure 120 and the piercing means 211 is configured to penetrate a surface of the first structure 110 facing the second structure 120. The second part of Fig. 16a is analogues to those introduced with reference to Figs. 12-14c. The second part of Fig. 16b is analogues to those introduced with reference to Figs. 12-14d. The second part of Fig. 16c is analogues to those introduced with reference to Figs. 12-14b.

According to one aspect, a resilient fastening arrangement, a vibration damping assembly and a method according to any of the following examples may be provided.

Example 1: A resilient fastening arrangement (200) for construction of a vibration damping assembly (100) comprising at least a first structure (110) and a second structure (120), the resilient fastening arrangement (200) comprising:
a first part (210) for fixation to the first structure (110) of the assembly (100),
a second part (220) for engagement with the second structure (120) of the assembly (100), and
a third part (230) arranged to resiliently connect the first part (210) to the second part (220) along an arrangement axis (D), wherein the third part (230) comprises a resilient member (235) arranged to at least partially extend within a hole (125) of the first structure (110) and/or of the second structure (120) of the assembly (100).

Example 2: The resilient fastening arrangement (200) according to example 1, wherein:
the resilient member (235) comprises a core region (237) located, along the arrangement axis (D), between two end regions (236, 238) of the resilient member (235), wherein each of the end regions (236, 238) is attached to the first and second parts (210, 220) respectively; and
the core region (237) is configured to have a core region spring rate along the arrangement axis (D), and the end regions (236, 238) are configured to have a spring rate along the arrangement axis (D) being different from the core region spring rate.

Example 3: A resilient fastening arrangement (200) for construction of a vibration damping assembly (100) comprising at least a first structure (110) and a second structure (120), the resilient fastening arrangement (200) comprising:
a first part (210) for fixation to the first structure (110) of the assembly (100),
a second part (220) for engagement with the second structure (120) of the assembly (100), and
a third part (230) comprising a resilient member (235) arranged to resiliently connect the first part (210) to the second part (220) along an arrangement axis (D), wherein the resilient member (235) comprises a core region (237) located, along the arrangement axis (D), between two end regions (236, 238) of the resilient member (235), wherein each of the end regions (236, 238) is attached to the first and second parts (210, 220) respectively; and
the core region (237) is configured to have a core region spring rate along the arrangement axis (D), and the end regions (236, 238) are configured to have a spring rate along the arrangement axis (D) being different from the core region spring rate.

Example 4: The resilient fastening arrangement (200) according to example 3, wherein the resilient member (235) is arranged to at least partially extend within a hole (125) of the first structure (110) and/or of the second structure (120) of the assembly (100).

Example 5: The resilient fastening arrangement (200) according to any of examples 2, 3 or 4, wherein the core region spring rate of the core region (237) of the resilient member (235) is lower than the spring rate of the end regions (236, 238) of the resilient member (235).

Example 6: The resilient fastening arrangement (200) according to any of examples 1, 2 or 4, wherein the hole (125) is a through-hole (125) of the second structure (120) and the resilient fastening arrangement (200) is adapted such that the resilient member (235) is to be fully arranged in the through-hole (125) of the second structure (120) of the assembly (100).

Example 7: The resilient fastening arrangement (200) according to any of the preceding examples, wherein the second part (220) comprises a head portion (221) provided with head portion connection means (223) adapted to engage the second structure (120) by fixation to the second structure (120).

Example 8: The resilient fastening arrangement (200) according to any of the preceding examples, wherein the resilient member (235) is arranged such that, when the resilient fastening arrangement (200) is used in the construction of the vibration damping assembly (100), fixation of the resilient fastening arrangement (200) to the first structure (110) and second structure (120), causes biasing of the resilient member (235).

Example 9: The resilient fastening arrangement (200) according to any of examples 1, 2 or 4 to 8, wherein the first part (210) comprises piercing means (211) adapted to form the through-hole (125) for the resilient member (235) in the second structure (120) and/or the hole (125) for the resilient member (235) in the first structure (110) of the assembly (100), when the resilient fastening arrangement (200) is fastened to vibration damping assembly (100).

Example 10: The resilient fastening arrangement (200) according to any of the preceding examples, wherein the first part (210) comprises a first connecting portion (215), the second part (220) comprises a second connecting portion (225) and wherein a first end (236) of the third part (230) is adapted to be attached to first connecting portion (215) and a second end (238) of the third part (230) is adapted to be attached to the second connecting portion (225).

Example 11: The resilient fastening arrangement (200) according to any of the preceding examples, wherein the resilient member (235) is a spring (235).

Example 12: The resilient fastening arrangement (200) according to example 10 or 11, wherein the third part (230) is attached to the first and second connecting portions (215, 225) by means of threading (217, 227) on the first and second connecting portions (215, 225) respectively.

Example 13: The resilient fastening arrangement (200) according to example 12, wherein a threading pitch of the threading (217, 227) of the first and second connecting portions (215, 225) is offset, along the arrangement axis (D), from a spring pitch of the spring (235) such that the spring (235) is biasedly attached to the first and second connecting portions (215, 225).

Example 14: The resilient fastening arrangement (200) according to any of examples 11 to 13, wherein the spring pitch of the spring (235) is higher in a core region (237) of the spring (235) arranged between the first and second parts (220) than in end regions (236, 238) attaching to the first and second parts (210, 220).

Example 15: The resilient fastening arrangement (200) according to any of the preceding examples, wherein the third part (230) comprises a sleeve (233) arranged to at least partly, along the arrangement axis (D), surround the resilient member (235).

Example 16: The resilient fastening arrangement (200) according to any of the preceding examples, wherein the first part (210) is provided with threads (214) for fixation in the first structure (110).

Example 17: The resilient fastening arrangement (200) according to any of the preceding examples, wherein a head portion (221) of the second part (220) is provided with head part connection means (223) in the form of threads (223) for fixation in the second structure (120).

Example 18: The resilient fastening arrangement (200) according to any of the preceding examples, wherein the first part (210) further comprises a radially protruding flange portion (212).

Example 19: The resilient fastening arrangement (200) according to any of the preceding examples, wherein a maximum radius of the first part (210) is equal to, or larger than, a maximum radius of the third part (230) and a maximum radius of the second part (220) is larger than the maximum radius of the first part (210).

Example 20: A vibration damping assembly (100) comprising at least a first structure (110) and a second structure (120), the first structure (110) such as a supporting section in the form of a studded section and the second structure (120) such as a sheet material in the form of drywall or metal, wherein the second structure (120) is resiliently attached to the first structure (110) by means of a plurality of resilient fastening arrangements (200) comprising:
a first part (210) for fixation to the first structure (110) of the assembly (100),
a second part (220) for engagement with the second structure (120) of the assembly (100), and
a third part (230) comprising a resilient member arranged to resiliently connect the first part (210) to the second part (220) along an arrangement axis (D), wherein the resilient member (235) comprises a core region (237) located, along the arrangement axis (D), between two end regions (236, 238) of the resilient member (235), wherein each of the end regions (236, 238) is attached to the first and second parts (210, 220) respectively; and
the core region (237) is configured to have a core region spring rate along the arrangement axis (D), and the end regions (236, 238) are configured to have a spring rate along the arrangement axis (D) being different from the first axial spring rate.

Example 21: The vibration damping assembly (100) according to example 20, wherein the second structure (120) is located between a head portion (221) of the second part (220) of the resilient fastening arrangement (200) and the first structure (110).

Example 22: The vibration damping assembly (100) according to example 20 or 21, wherein the resilient member (235) is accommodated by a through-hole (125) of the second structure (120) and/or a hole (125) of the first structure (110).

Example 23: The vibration damping assembly (100) according to any of examples 20 to 22, wherein the second structure (120) is biased in relation to first structure (110) by means of the resilient member (235) of the resilient fastening arrangement (200).

Example 24: The vibration damping assembly (100) according to any of examples 20 to 23, wherein the resilient fastening arrangement (200) is the resilient fastening arrangement (200) according to any of examples 1 to 19.

Example 25: A vibration damping assembly (100) comprising at least a first structure (110) and a second structure (120), the first structure (110) such as a supporting section in the form of a studded section and the second structure (120) such as a sheet material in the form of drywall or metal, wherein the second structure (120) is resiliently attached to the first structure (110) by means of a plurality of resilient fastening arrangements (200) comprising:
a first part (210) fixed to the first structure (110) of the assembly (100),
a second part (220) fixed to the second structure (120) of the assembly (100), and
a third part (230) arranged to resiliently connect the first part (210) to the second part (220) along an arrangement axis (D), wherein the third part (230) comprises a resilient member (235) arranged to at least partially extend within a hole (125) of the first structure (110) and/or of the second structure (120) of the assembly (100).

Example 26: The vibration damping assembly (100) according to example 25, wherein the hole (125) is a through-hole (125) of the second structure (120) and the resilient member (235) is accommodated by the through-hole (125) of the second structure (120).

Example 27: The vibration damping assembly (100) according to any of examples 25 to 26, wherein the second structure (120) is biased in relation to first structure (110) by means of the resilient member (235) of the resilient fastening arrangement (200).

Example 28: The vibration damping assembly (100) according to any of examples 25 to 27, wherein the resilient fastening arrangement (200) is the resilient fastening arrangement (200) according to any of examples 1 to 19.

Example 29: A method (400) for constructing a vibration damping assembly (100) comprising,
providing (410) a first structure (110) such as a supporting section in the form of a studded section,
providing (420) a second structure (120) such as a sheet material in the form of drywall or metal,
arranging (430) a resilient fastening arrangement (200) according to any of the examples 1 to 19 such that:
   the first part (210) of the resilient fastening arrangement (200) is fixed to the first structure (110) of the arrangement (100),
   the second part (220) of the resilient fastening arrangement (200) is engaging the second structure (120) of the assembly (100), and
   during the arranging (430), subjecting (435) the resilient fastening arrangement (200) to an axial force such that the resilient member (235) is biased during the arranging (430) and
   removing (439) the axial force such that the second structure (120) becomes resiliently fastened to the first structure (110) by means of the resilient fastening arrangement (200).

Example 30: The method (400) according to example 29, wherein the step of arranging (430) the resilient fastening arrangement (200) further comprises arranging (433) the third part (230) of the resilient fastening arrangement (200) such that it is at least partly arranged in a hole (125) of the first structure (110) and/or in a through-hole (125) of the second structure (120) of the assembly (100).

Example 31: The method (400) according to example 30, further comprising forming (425) the through-hole (125) in the second structure (120) before the step of arranging (430) the resilient fastening arrangement (200).

Example 32: The method (400) according to example 30, wherein the through-hole (125) is formed (431) by means of a piercing means (211) of the first part (210) during the arranging (430) of the resilient fastening arrangement (200) to the second structure (120) and the first structure (110).

Example 33: The method (400) according to any of the examples 29 to 32, wherein the step of arranging (430) the resilient fastening arrangement (200) is performed by means of rotating (437) the resilient fastening arrangement (200) about the arrangement axis (D).

Example 34: The method (400) according to example 33, wherein the rotation is performed until an end section of the second part (220) of the resilient fastening arrangement (200) is substantially flush with a face of the second structure (120) facing away from the first structure (110).

Example 35: The method (400) according to any of the examples 29 to 34, wherein the step of subjecting (435) comprises fixating (437) a third structure (130), such as a sheet material in the form of drywall or metal, such that the second structure (120) is sandwiched between the first structure (110) and the third structure (130).

Several embodiments and features have been introduced throughout this disclosure and they are all possible to combine with another except where the opposite is explicitly stated or when the opposite is obvious to the skilled person. The sleeve 233 of Fig. 10 is but one example of a feature that may be combined with any of the embodiments of the resilient fastening arrangement 200.

It should also be mentioned that the vibration damping assemblies introduced herein may comprise one or more resilient fastening arrangement 200 of one or more different embodiments.

Emphasis should be made that although the first structure 110 and the second structure 120 are depicted vertically throughout this disclosure, horizontal construction in the form of ceilings or floors are of course not excluded from this disclosure.

## Claims

1. A resilient fastening arrangement (200) for construction of a vibration damping assembly (100) comprising at least a first structure (110) and a second structure (120), the resilient fastening arrangement (200) comprising:
a first part (210) for fixation to the first structure (110) of the assembly (100),
a second part (220) for engagement with the second structure (120) of the assembly (100), and
a third part (230) arranged to resiliently connect the first part (210) to the second part (220) along an arrangement axis (D), wherein the third part (230) comprises a resilient member (235) arranged to at least partially extend within a hole (125) of the first structure (110) and/or of the second structure (120) of the assembly (100),
wherein the first part (210) further comprises a radially protruding flange portion (212).

2. The resilient fastening arrangement (200) according to claim 1, wherein:
the resilient member (235) comprises a core region (237) located, along the arrangement axis (D), between two end regions (236, 238) of the resilient member (235), wherein each of the end regions (236, 238) is attached to the first and second parts (210, 220) respectively; and
the core region (237) is configured to have a core region spring rate along the arrangement axis (D), and the end regions (236, 238) are configured to have a spring rate along the arrangement axis (D) being different from the core region spring rate.

3. The resilient fastening arrangement (200) according to claim 2, wherein the core region spring rate of the core region (237) of the resilient member (235) is lower than the spring rate of the end regions (236, 238) of the resilient member (235).

4. The resilient fastening arrangement (200) according any of the preceding claims, wherein the hole (125) is a through-hole (125) of the second structure (120) and the resilient fastening arrangement (200) is adapted such that the resilient member (235) is to be fully arranged in the through-hole (125) of the second structure (120) of the assembly (100).

5. The resilient fastening arrangement (200) according to any of the preceding claims, wherein the first part (210) comprises a first connecting portion (215), the second part (220) comprises a second connecting portion (225) and wherein a first end (236) of the third part (230) is adapted to be attached to first connecting portion (215) and a second end (238) of the third part (230) is adapted to be attached to the second connecting portion (225).

6. The resilient fastening arrangement (200) according to any of the preceding claims, wherein the resilient member (235) is a spring (235).

7. The resilient fastening arrangement (200) according to claim 5 or 6, wherein the third part (230) is attached to the first and second connecting portions (215, 225) by means of threading (217, 227) on the first and second connecting portions (215, 225) respectively.

8. The resilient fastening arrangement (200) according to claim 7, wherein a threading pitch of the threading (217, 227) of the first and second connecting portions (215, 225) is offset, along the arrangement axis (D), from a spring pitch of the spring (235) such that the spring (235) is biasedly attached to the first and second connecting portions (215, 225).

9. The resilient fastening arrangement (200) according to any of claims 6 to 8,
wherein the spring pitch of the spring (235) is higher in a core region (237) of the spring (235) arranged between the first and second parts (220) than in end regions (236, 238) attaching to the first and second parts (210, 220).

10. The resilient fastening arrangement (200) according to any one of the preceding claims, wherein the second part (220) is for fixation to the second structure (120) of the vibration damping assembly (100).

11. A vibration damping assembly (100) comprising at least a first structure (110) and a second structure (120), the first structure (110) such as a supporting section in the form of a studded section and the second structure (120) such as a sheet material in the form of drywall or metal, wherein the second structure (120) is resiliently attached to the first structure (110) by means of a plurality of resilient fastening arrangements (200) according to any one of claims 1 to 10.

12. The vibration damping assembly (100) according to claim 11, wherein a gap is provided between the first structure (110) and the second structure (120) in an axial direction of the resilient fastening arrangement (200) due to the resilient member (235) of the third part (230).

13. A method (400) for constructing a vibration damping assembly (100) comprising,
providing (410) a first structure (110) such as a supporting section in the form of a studded section,
providing (420) a second structure (120) such as a sheet material in the form of drywall or metal,
arranging (430) a resilient fastening arrangement (200) such that: the first part (210) of the resilient fastening arrangement (200) is fixed to
the first structure (110) of the arrangement (100), the second part (220) of the resilient fastening arrangement (200) is
engaging the second structure (120) of the assembly (100), and the third part (230) of the resilient fastening arrangement (200) is at least
partly arranged in a hole (125) of the first structure (110) and/or in a through-hole (125) of the second structure (120) of the assembly (100)
during the arranging (430), subjecting (435) the resilient fastening arrangement (200) to an axial force such that the resilient member (235) is biased during the arranging (430) and
removing (439) the axial force such that the second structure (120) becomes resiliently fastened to the first structure (110) by means of the resilient fastening arrangement (200).

14. Method (400) according to claim 13, wherein the step of removing (439) the axial force further comprises removing (439) the axial force resulting in that the second structure (120) will be pushed back such that said second structure (120) becomes resiliently fastened to the first structure (110) by means of the resilient fastening arrangement (200) and a gap (115) is formed between the first structure (110) and the second structure (120) along an arrangement axis (D).

15. Method (400) according to claim 13 or 14, wherein the resilient fastening arrangement (200) is a resilient fastening arrangement (200) according to any one of the claims 1 to 10.
